Europäisches Patentamt

European Patent Office

Office européen des brevets

(11) Veröffentlichungsnummer: **0 369 230**
**A1**

## (12) EUROPÄISCHE PATENTANMELDUNG

(21) Anmeldenummer: **89120065.1**

(22) Anmeldetag: **28.10.89**

(51) Int. Cl.5: **D01H 1/16, H02G 5/06**

(30) Priorität: **12.11.88 DE 3838418**

(43) Veröffentlichungstag der Anmeldung:
**23.05.90 Patentblatt 90/21**

(84) Benannte Vertragsstaaten:
**CH DE FR IT LI**

(71) Anmelder: **Zinser Textilmaschinen GmbH**
**Hans-Zinser-Strasse Postfach 1480**
**D-7333 Ebersbach/Fils(DE)**

(72) Erfinder: **König, Herbert, Dipl.-Ing. (FH)**
**Wolfshalde 69**
**D-7333 Ebersbach/Fils(DE)**

(74) Vertreter: **Wilhelm & Dauster Patentanwälte**
**European Patent Attorneys**
**Hospitalstrasse 8**
**D-7000 Stuttgart 1(DE)**

(54) **Spinnereimaschine mit mehreren über die Länge der Maschine verteilten Elektromotoren.**

(57) Bei bekannten Spinnereimaschinen erfolgt der Anschluß der mit gleicher Spannung und Frequenz versorgten Elektromotoren über an der Spinnereimaschine verlegte Kabel. Hierdurch ist die Montage einer derartigen Spinnereimaschine aufwendig.

Bei der neuen Spinnereimaschine sind in Längsrichtung der Maschine in einem geschlossenen Kanal (1) Stromschienen (3, 4, 5, 6) verlegt, an die Zuleitungen zu den einzelnen Elektromotoren (31, 32, 33) angeschlossen sind. Aufwendige Verkabelungsarbeiten bei der Montage der Spinnereimaschine entfallen hierdurch.

Fig. 1

EP 0 369 230 A1

## Spinnereimaschine, mit mehreren über die Länge der Maschine verteilten Elektromotoren

Die Erfindung betrifft eine Spinnereimaschine nach dem Oberbegriff des Patentanspruches 1.

Es sind Spinnereimaschinen bekannt, bei denen die an der Längsseite der Maschine angeordneten Spindeln in sogenannten Feldern zusammengefaßt sind, wobei zum Antrieb der in dem jeweiligen Feld angeordneten Spindeln ein Elektromotor vorgesehen ist. Dieser sogenannte Felderantrieb besitzt Elektromotoren, die mit gleicher Spannung und Frequenz versorgt werden. Bei den bekannten Spinnereimaschinen werden die einzelnen Elektromotoren über Stromversorgungskabel mit einer zentralen Stromversorgung verbunden. Eine derartige Verkabelung erfordert bei der Montage der Maschine eine hohen Zeitaufwand und erhöht somit die Kosten.

Der Erfindung liegt die Aufgabe zugrunde, eine Spinnereimaschine der eingangs genannten Art so auszubilden, daß der Anschluß der Elektromotoren erleichert ist. Diese Aufgabe wird bei einer gattungsgemäßen Spinnereimaschine durch die kennzeichnenden Merkmale des Patentanspruches 1 gelöst.

Bei der neuen Spinnereimaschine ist vorgesehen, daß in Längsrichtung der Maschine in einem geschlossenen Kanal Stromschienen verlegt sind, an die Zuleitungen zu den einzelnen Elektro motoren angeschlossen sind. Hierbei sind die Stromschienen mit einer zentralen Stromversorgung verbunden. Der Anschluß der Elektromotoren ist in einfacher Weise und ohne großen Zeitaufwand durchführbar. Auch wird die Fehlersuche und der Austausch der Elektromotoren erleichtert.

Weitere Merkmale und Vorteile der Erfindung ergeben sich aus den Unteransprüchen.

Eine vorteilhafte Ausführungsform der Erfindung sieht vor, daß der Kanal aus mehreren, hintereinander angeordneten Teilstücken zusammengesetzt ist, wobei sich entsprechende Stromschienen leitend miteinander verbunden sind. Diese Ausführungsform ist insbesondere bei einer Spinnereimaschine vorteilhaft, die selbst aus mehreren Teilstücken aufgebaut ist und erst an ihrem Einsatzort montiert wird. Es kann vorteilhaft sein, wenn die Teilstücke des Kanals schon bei der Anlieferung des Maschinenteilstücks an diesem befestigt sind.

Eine vorteilhafte Weiterbildung sieht vor, daß an dem Kanal Steckdosen angeordnet sind, die einerseits über Leitungen mit den Stromschienen verbunden sind und an die andererseits die Elektromotoren mittels Steckern angeschlossen sind. Hierdurch kann die elektrische Verbindung zwischen den Stromschienen und den Elektromotoren in besonders einfacher Weise hergestellt oder gelöst werden.

Eine andere erfindungsgemäße Ausführungsform sieht vor, daß in dem Kanal neben den Stromschienen für die Stromversorgung der Elektromotoren zusätzliche Stromschienen für eine Steuerleitung vorgesehen sind.

Die zusätzlichen Stromschienen können in einem von den Stromschienen zur Versorgung der Elektromotoren durch eine isolierende Trennwand abgetrennten Kanalbereich angeordnet sein. Diese Ausführungsform empfiehlt sich in den Fällen, wo die Strom schienen zur Stromversorgung der Elektromotoren Starkstrom führen und in den zusätzlichen Stromschienen lediglich Schwachstrom fließt.

Bei einer vorteilhaften Weiterbildung sind zwei als Schleife geschaltete zusätzliche Stromschienen vorgesehen, wobei in der Schleife der Funktionsüberwachung der Elektromotoren dienende Schaltelemente und ein hierdurch betätigtes bistabiles Kippglied angeordnet sind, dessen Ausgang mit die Stromschienen zur Versorgung der Elektromotoren stromlos schaltenden Schaltern verbunden ist. Das bistabile Kippglied kann beispielsweise als bistabiles Relais ausgebildet sein. Fließt in der von den zusätzlichen Stromschienen gebildeten Schleife ein Haltestrom, so sind die mit dem Ausgang des bistabilen Relais verbundenen Schalter geschlossen, wodurch in den Stromschienen zur Versorgung der Elektromotoren ein Strom fließt. Wird nun eines der in der Schleife liegenden Schaltelemente bei einer Temperaturüberschreitung eines Elektromotors betätigt, so wird der Haltestrom unterbrochen. Hierdurch nimmt das bistabile Relais eine zweite Stellung ein, wodurch die Stromversorgung der Stromschienen zur Versorgung der Elektromotoren unterbrochen wird.

Als Schaltelemente zur Funktionsüberwachung der Elektromotoren können Thermoschalter und/oder Thermistoren eingesetzt werden.

Eine Weiterbildung sieht vor, daß weitere Schaltelemente in der Schleife angeordnet sind, die als von einem Deckel des Kanals betätigte Schalter ausgebildet sind. Ist der Deckel des Kanals entweder geöffnet oder nicht richtig verschlossen, so werden wiederum über das bistabile Kippglied die Stromschienen zur Versorgung der Elektromotoren stromlos geschaltet.

Die Montage der Schaltelemente ist besonders einfach, wenn an mindestens einer der zusätzlichen Stromschienen Unterbrechungen vorgesehen sind, die von den als Öffnern ausgebildeten Schaltelementen überbrückt sind. An den Überbrückungen können die Schaltelemente in einfacher Weise angeklemmt werden. Überbrückungen, die nicht benötigt werden, können mit einem Stromkabel überbrückt werden.

Eine Weiterbildung sieht vor, daß wenigstens einigen der Schaltelemente jeweils eine Anzeigevorrichtung zugeordnet ist. Hierdurch wird eine schnelle Lokalisierung eines ausgelösten Schaltelementes ermöglicht. Als Anzeigevorrichtung können beispielsweise Signallampen vorgesehen sein. Diese können derart in der Schleife angeordnet sein, daß beim Ansprechen eines Schaltelementes die zwischen der Spannungsquelle der Schleife und dem Schaltelement angeordneten Signallampen brennen und die zwischen dem Schaltelement und dem bistabilen Kippglied angeordneten Signallampen erlöschen. Dies ist insbesondere bei sehr großen Spinnereimaschinen mit vielen Elektromotoren vorteilhaft, da dann eine schnelle Lokalisierung des schadhaften, überhitzten Elektromotors möglich ist.

In der Zeichnung ist eine vorteilhafte Ausführungsform der Erfindung dargestellt, die nachfolgend beschrieben wird. Es zeigen:

Fig. 1 einen schematischen Querschnitt durch einen Kanal gemäß der Erfindung,

Fig. 2 eine Prinzipskizze der Anordnung des Kanals an einer Spinnereimaschine mit Felderantrieb,

Fig. 3 die Vergrößerung der Einzelheit III gemäß Fig. 2,

Fig. 4 eine vergrößerte Darstellung eines Verbindungsteiles gemäß Fig. 3,

Fig. 5 ein Blockschaltbild einer an der Spinnereimaschine vorgesehenen Steuerleitung und

Fig. 6 eine Darstellung einer praktisch ausgeführten Schaltungsanordnung.

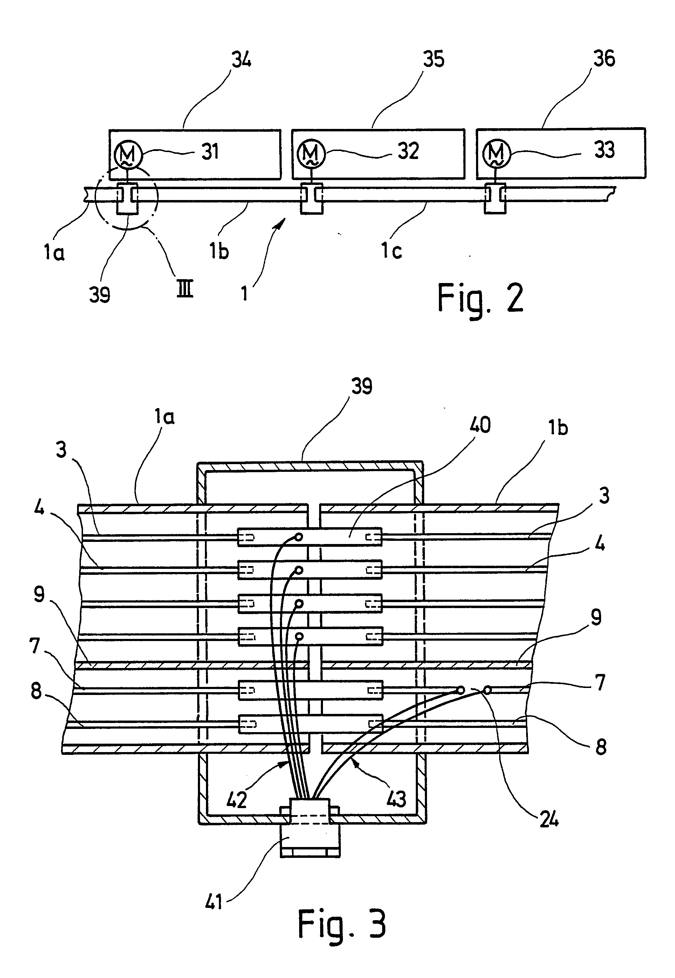

In Fig. 2 sind in prinzipieller Darstellung die Felder (34, 35, 36) einer nicht näher gezeigten Spinnereimaschine dargestellt, wobei den einzelnen Feldern (34, 35, 36) jeweils ein Elektromotor (31, 32, 33) zugeordnet ist. Die Elektromotoren (31, 32,33) treiben jeweils ein Feld von Spindeln an, die an den Längsseiten der Spinnereimaschine angeordnet sind. Die Elektromotoren (31, 32, 33) sind jeweils gleichartig ausgebildet und werden mit gleicher Spannung und Frequenz versorgt.

Die Stromversorgung der Elektromotoren (31, 32, 33) erfolgt über Stromschienen (3, 4, 5, 6), die in einem geschlossenen Kanal (1) verlegt sind. Dieser Kanal (1) baut sich aus mehreren Teilstükken (1a, 1b, 1c) auf, wobei sich entsprechende Stromschienen (3, 4, 5, 6) leitend miteinander verbunden sind. Der Anschluß der Elektromotoren (31, 32, 33) kann in einfacher Weise durch eine Verbindungsleitung zu den im Kanal (1) angeordneten Stromschienen (3, 4, 5, 6) hergestellt werden. Aufwendige Verkabelungsarbeiten zum Anschluß der Elektromotoren (31, 32, 33) sind deshalb nicht notwendig.

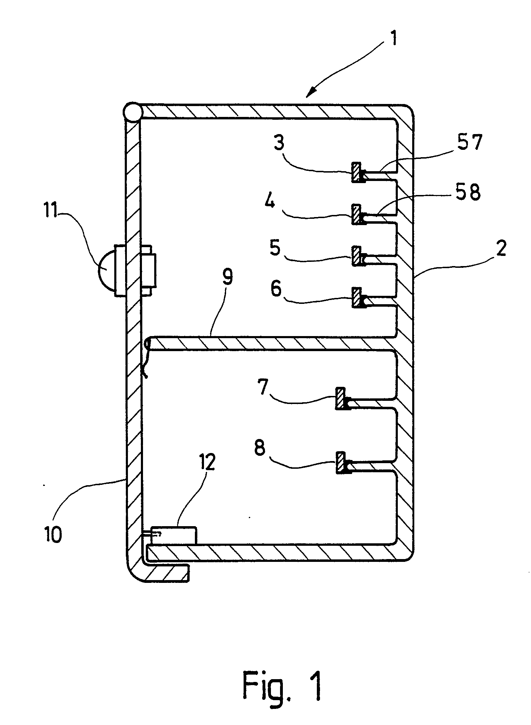

Der Kanal (1) besitzt gemäß Fig. 1 ein Gehäuse (2) mit U-förmigem Querschnitt, an dessen oberer Vorderkante ein Deckel (10) schwenkbeweglich gelagert ist. Der Kanal (1) und der Deckel (10) sind aus einem isolierenden Kunststoff hergestellt. Die Stromschienen (3, 4, 5, 6) sind im Innern des Kanals (1) am freien Ende von schienenförmigen Halteteilen (57,58) befestigt, die vom Gehäuse (2) abragen. Die Stromschienen (3, 4, 5, 6) sind mit der in der Zeichnung nicht dargestellten zentralen Stromversorgung für die Spinnereimaschine verbunden. Weiterhin sind im Kanal (1) zusätzliche Stromschienen (7, 8) vorgesehen, die in einem durch eine isolierende Trennwand (9) abgetrennten Kanalbereich angeordnet sind. Während in den Stromschienen (3, 4, 5, 6) Starkstrom für die Elektromotoren (31, 32, 33) fließt, führen die zusätzlichen Stromschienen (7, 8) nur einen Schwachstrom. Auf die Funktion der zusätzlichen Stromschienen (7, 8) wird weiter unten noch eingegangen werden.

Zweckmäßigerweise wird vorgesehen, daß die Stromschienen (7, 8) nur eine Potentialstufe aufweisen, beispielsweise von 0 Volt bis 24 Volt. Um weiter zu verhindern, daß die für Starkstrom bestimmten Stromschienen (3, 4, 5, 6) durch Einstreuungen Signale der als Steuerleitungen dienenden Stromschienen (7, 8) nachteilig beeinflussen könnten, wird bei einer ersten Ausführungsform vorgesehen, daß das Gehäuse (2) und der Deckel (10) aus Metall hergestellt sind. Zusätzlich ist noch an der Trennwand (9) eine sich an den Deckel (10) anlegende Abschirmzunge aus Metall vorgesehen. Bei einer anderen Ausführungsform wird vorgesehen, daß das Gehäuse aus Kunststoff hergestellt und innen oder außen mit einer Metallbeschichtung versehen wird. Auch in diesem Fall ist das Anbringen einer Abschirmzunge aus Metall an der Trennwand (9) zweckmäßig. In weiterer Ausgestaltung wird zusätzlich vorgesehen, daß abgeschirmte Kabel als Steuerleitungen eingesetzt werden, die in dem von den Stromschienen (3, 4, 5, 6) über die Trennwand (9) abgeteilten Kanalbereich liegen.

Gemäß Fig. 3 sind die Endbereiche der Teilstücke (1a, 1b) des Kanals (1) in ein Kupplungsgehäuse (39) eingeführt, das ebenfalls aus einem isolierenden Kunststoff hergestellt ist. Die Stromschienen (3, 4, 5, 6, 7, 8) sind mittels Verbindungsteilen (40) leitend miteinander verbunden.

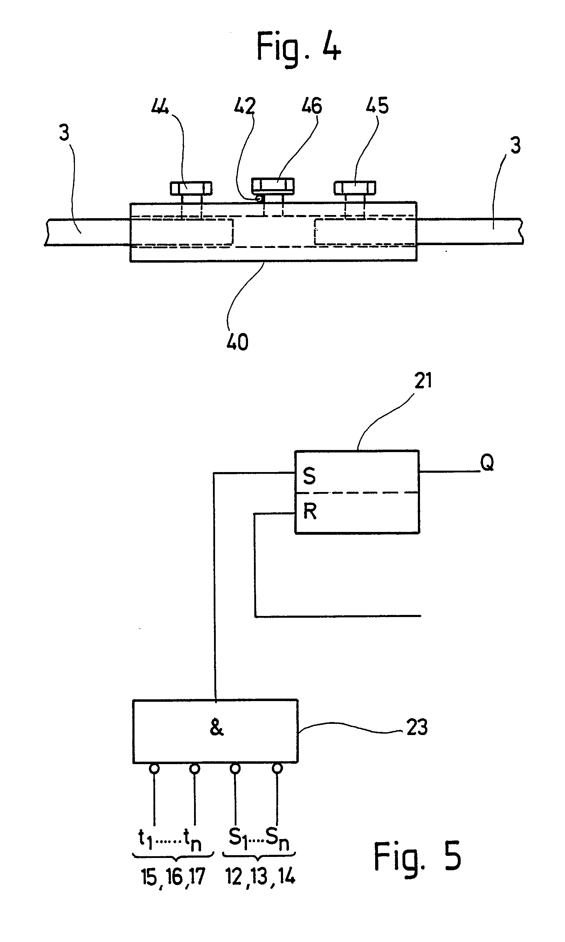

Gemäß Fig. 4 nimmt das Verbindungsstück (40) jeweils den Endbereich einer Stromschiene (3) auf, wobei zur Befestigung Schrauben (44,45) vorgesehen sind. Eine am Kupplungsgehäuse (39) vorgesehene Steckdose (41) ist über Zuleitungen (42) mit den Stromschienen (3, 4, 5, 6) verbunden. Die Zuleitungen (42) werden an einer Befestigungsschraube (46) an dem Verbindungsstück (40) angeklemmt.

Wie in der Zeichnung nicht explizit dargestellt ist, sind an den Elektromotoren (31, 32, 33) Zuleitungen angeordnet, die mittels eines Steckers mit der Steckdose (41) verbunden werden. Somit ist in einfacher und schneller Weise eine An- und Abkopplung der Elektromotoren (31, 32, 33) möglich.

Die zusätzlichen Stromschienen (7, 8) dienen als Steuerleitung für ein bistabiles Kippglied (21), das Schalter (47, 48, 49) betätigt, die die Stromschienen (3, 4, 5, 6) stromlos schalten.

Gemäß Fig. 5 werden einem UND-Glied (23) Schaltsignale von Schaltelementen (15, 16, 17) zugeführt, die der Temperaturüberwachung der Elektromotoren (31, 32, 33) dienen und die vorzugsweise außerhalb des Kanals (1) an den Elektromotoren (31, 32, 33) angeordnet sind. Weiterhin werden dem UND-Glied (23) Schaltsignale von Schaltelementen (12, 13, 14) zugeführt, die als vom Deckel (10) betätigte Schalter ausgebildet sind. Die Ausgangssignale des UND-Gliedes (23) werden dem Setzeingang (S) des bistabilen Kippgliedes (21) zugeführt, dessen Ausgang (Q) die Stellung der Schalter (47,48,49) steuert. Das Rücksetzen des bistabilen Kuppgliedes (21) erfolgt über ein Signal, das dem Rücksetzeingang (R) zugeführt wird.

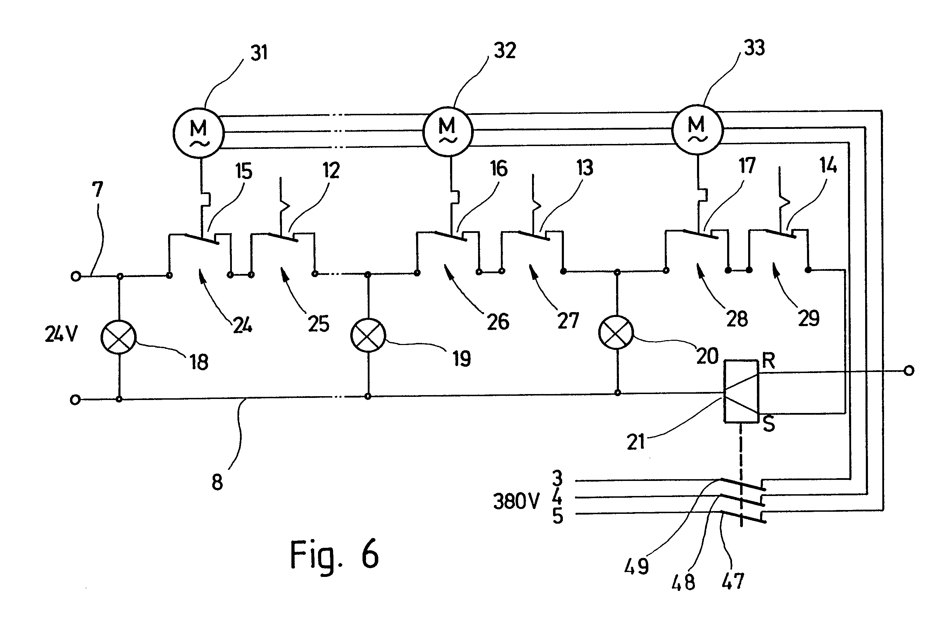

Gemäß Fig. 6 sind die zusätzlichen Stromschienen (7, 8) als Schleife geschaltet und mit einer Spannungsquelle (24 Volt) verbunden. In der zusätzlichen Stromschiene (7) sind Unterbrechungen (24, 25, 26, 27, 28, 29) vorgesehen, die durch Schaltelemente überbrückt sind. Die Schaltelemente (15, 16, 17) zur Temperaturüberwachung der Elektromotoren (31, 32, 33) können als Thermoschalter oder Thermistoren ausgebildet sein, die direkt an den Elektromotoren (31, 32, 33) befestigt sind. Es ist besonders vorteilhaft, wenn die Verbindung zwischen den Schaltelementen (15, 16, 17) zur Temperaturüberwachung und den Unterbrechungen (24) in der zusätzlichen Stromschiene (7) über eine Verbindungsleitung (43) erfolgt, die ebenfalls mit der Steckdose (41) verbunden ist (Fig. 3). An den Unterbrechungen (25, 27, 29) sind Schaltelemente (12, 13, 14) angeordnet,die als von Deckeln (10) des Kanals betätigte Schalter ausgebildet ist. Sämtliche Schaltelemente sind als Öffner ausgeführt.

Sind die Schaltelemente (12, 13, 14, 15, 16, 17) geschlossen, so fließt in der von den zusätzlichen Stromschienen (7, 8) gebildeten Schleife ein Haltestrom für ein bistabiles Relais (21). In diesem Schaltzustand sind die Schalter (47, 48, 49) geschlossen, so daß in den Stromschienen (3, 4, 5, 6) zur Stromversorgung Elektromotoren (31, 32, 33) ein Strom fließt. Wird nun eines der Schaltelemente (12, 13, 14, 15, 16, 17) ausgelöst, so wird der Haltestrom für das bistabile Relais (21) unterbrochen. Der Ausgang des bistabilen Relais (21) steuert die Schalter (47, 48, 49) an, wodurch die Stromschienen (3, 4, 5, 6) stromlos geschaltet werden. Dieser Schaltvorgang kann entweder durch eine Temperaturüberschreitung eines oder mehreren Elektromotoren (31,32,33) oder durch einen nicht geschlossenen Deckel (10) ausgelöst werden.

Die Rückstellung des bistabilen Relais (21) kann entweder manuell oder durch eine automatische Steuerung erfolgen, die an den Rücksetzeingang (R) ein entsprechendes Schaltsignal gibt.

Weiterhin sind in der von den zusätzlichen Stromschienen (7, 8) gebildeten Schleife Signallampen (18, 19, 20) angeordnet, die als Anzeigevorrichtung dienen. Die Signallampen sind an der Außenseite des Kanals (1) bzw. am Deckel (10) gut sichtbar angeordnet. Die Verdrahtung der Signallampen (18, 19, 20) erfolgt im Bereich der Schaltelemente zwischen den zusätzlichen Stromschienen (7, 8). Fließt durch die zusätzlichen Stromschienen (7, 8) ein Haltestrom, so brennen alle Signallampen (18,19,20). Bei Auslösung eines Schaltelementes (12, 13, 14, 15, 16, 17) erlöschen alle Signallampen, die zwischen dem Schaltelement und dem bistabilen Kippglied (21) angeordnet sind. Somit ist eine leichte Lokalisierung der Schaltelemente bzw. des Teiles möglich, das das Schaltelement ausgelöst hat.

Es sei abschließend noch erwähnt, daß die Erfindung auch bei Spinnereimaschinen mit Einzelmotorantrieb der Spindeln zum Einsatz kommen kann. Auch hier wird der wesentliche Vorteil erreicht, daß aufwendige Verkabelungsarbeiten bei der Montage der Spinnereimaschine entfallen.

## Ansprüche

1. Spinnereimaschine, mit mehreren über die Länge der Maschine verteilten Elektromotoren, die mit gleicher Spannung und Frequenz versorgt sind, dadurch gekennzeichnet, daß in Längsrichtung der Maschine in einem geschlossenen Kanal (1) Stromschienen (3, 4, 5, 6) verlegt sind, an die Zuleitungen zu den einzelnen Elektromotoren (31, 32, 33) angeschlossen sind.

2. Spinnereimaschine nach Anspruch 1, dadurch gekennzeichnet, daß der Kanal (1) aus mehreren, hintereinander angeordneten Teilstücken (1a, 1b, 1c) zusammengesetzt ist, wobei sich entsprechende Stromschienen (3, 4, 5, 6) leitend miteinander verbunden sind.

3. Spinnereimaschine nach Anspruch 1 oder 2, dadurch gekennzeichnet, daß an dem Kanal (1) Steckdosen (41) angeordnet sind, die einerseits über Leitungen (42) mit den Stromschienen (3, 4, 5, 6) verbunden sind und an die andererseits die Elektromotoren (31, 32, 33) angeschlossen sind.

4. Spinnereimaschine nach einem der Ansprüche 1 bis 3, dadurch gekennzeichnet, daß in dem Kanal (1) neben den Stromschienen (3, 4, 5, 6) für die Stromversorgung der Elektromotoren (31, 32, 33) zusätzliche Stromschienen (7, 8) für eine Steuerleitung vorgesehen sind.

5. Spinnereimaschine nach einem der Ansprüche 1 bis 4, dadurch gekennzeichnet, daß der Kanal (1) als metallisches Gehäuse (2) hergestellt ist.

6. Spinnereimaschine nach einem der Ansprüche 1 bis 4, dadurch gekennzeichnet, daß der Kanal (1) als Gehäuse (2) aus Kunststoff hergestellt ist, dessen Wandungen innen und/oder außen mit einer metallischen Beschichtung versehen sind.

7. Spinnereimaschine nach einem der Ansprüche 1 bis 6, dadurch gekennzeichnet, daß die zusätzlichen Stromschienen (7, 8) und/oder Steuerkabel in einem von den Stromschienen (3, 4, 5, 6) zur Versorgung der Elektromotoren (31, 32, 33) durch eine isolierende Trennwand (9) abgetrennten Kanalbereich angeordnet sind.

8. Spinnereimaschine nach einem der Ansprüche 1 bis 7, dadurch gekennzeichnet, daß zwei als Schleife geschaltete zusätzliche Stromschienen (7,8) vorgesehen sind, wobei in der Schleife der Funktionsüberwachung der Elektromotoren (31, 32, 33) dienende Schaltelemente (15, 16, 17) und ein hierdurch betätigtes bistabiles Kippglied (21) angeordnet sind, dessen Ausgang mit die Stromschienen (3, 4, 5, 6) zur Versorgung der Elektromotoren (31, 32, 33) stromlos schaltenden Schaltern (47, 48, 49) verbunden ist.

9. Spinnereimaschine nach Anspruch 8, dadurch gekennzeichnet, daß die Schaltelemente (15, 16, 17) zur Funktionsüberwachung der Elektromotoren (31, 32, 33) als Thermoschalter und/oder Thermistoren ausgebildet sind.

10. Spinnereimaschine nach einem der Ansprüche 1 bis 9, dadurch gekennzeichnet, daß weitere Schaltelemente (12, 13, 14) in der Schleife angeordnet sind, die als von einem Deckel (10) des Kanals (1) betätigte Schalter ausgebildet sind.

11. Spinnereimaschine nach einem der Ansprüche 1 bis 10, dadurch gekennzeichnet, daß an mindestens einer der zusätzlichen Stromschienen (7, 8) Unterbrechungen (24, 25, 26, 27, 28, 29) vorgesehen sind, die von den als Öffnern ausgebildeten Schaltelementen (12, 13, 14, 15, 16, 17) überbrückt sind.

12. Spinnereimaschine nach einem der Ansprüche 1 bis 11, dadurch gekennzeichnet, daß wenigstens einem der Schaltelemente (12, 13, 14, 15, 16, 17) jeweils eine Anzeigevorrichtung zugeordnet ist.

13. Spinnereimaschine nach Anspruch 12, dadurch gekennzeichnet, daß als Anzeigevorrichtung Signallampen (18, 19, 20) vorgesehen sind.

Fig. 1

Fig. 2

Fig. 3

# Fig. 4

44 42 46 45

3 3

40

21

S Q

R

& 23

$t_1 \cdots t_n$   $S_1 \cdots S_n$

15, 16, 17   12, 13, 14

# Fig. 5

Fig. 6

EP 0 369 230 A1

**Europäisches Patentamt**

# EUROPÄISCHER RECHERCHENBERICHT

Nummer der Anmeldung

EP  89 12 0065

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-3434724 (F. UND H STAHLECKER)<br>* Seite 5, Zeilen 7 – 16; Figur 1 *<br>* Seite 5, Zeile 28 – Seite 6, Zeile 6 * | 1 | D01H1/16<br>H02G5/06 |
| Y | | 2, 3, 4,<br>5, 10,<br>11, 12,<br>13 | |
| Y | DE-A-3336214 (SKF KUGELAGERFABRIKEN_GMBH)<br>* Seite 11, Zeilen 16 – 31 * | 2 | |
| Y | * Seite 9, Zeilen 22 – 32 * | 3 | |
| Y | * Seite 12, Zeilen 5 – 23 * | 4 | |
| Y | US-A-4082393 (D.H. GAMBLE)<br>* Spalte 2, Zeilen 4 – 7; Figur 1 *<br>* Spalte 2, Zeilen 33 – 42 * | 3 | |
| Y | * Spalte 2, Zeilen 7 – 9 * | 5 | |
| | Prospekt::<br>"la Telemecanique Electrique presente ses<br>nouveautes CANALIS"<br>* Seite 4; Figuren 8, 9 * | 3 | |
| Y | AEG MITTEILUNGEN.<br>vol. 52, no. 1/2, 01 Januar 1962, BERLIN DE<br>Seiten 32 – 35; H. CASPARY:<br>"ZAPFENSCHIENENVERTEILER – EINE WIRTSCHAFTLICHE<br>KRAFTINSTALLATION"<br>* Seite 32, Spalte 2, Zeile 33 – Seite 33,<br>Spalte 1, Zeile 3 *<br>* Seite 33, Spalte 1, Zeilen 15 – 19 * | 10, 11 | |
| Y | FR-A-2345839 (COMP. IND. DES TELECOMMUNICATIONS<br>CIT-ALCATEL)<br>* Seite 2, Zeilen 31 – 39; Figur 3 * | 12, 13 | |
| A | GB-A-2102636 (MAXAM SWITCHGEAR LTD.) | | |

**RECHERCHIERTE SACHGEBIETE (Int. Cl.5 )**

D01H
H02G
B65H

Der vorliegende Recherchenbericht wurde für alle Patentansprüche erstellt

| Recherchenort | Abschlußdatum der Recherche | Prüfer |
|---|---|---|
| DEN HAAG | 09 MAERZ 1990 | HOEFER W.D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPO FORM 1503 03.82 (P0403)